# EUROPEAN PATENT APPLICATION

(11) **EP 2 073 394 A1**
(43) Date of publication of application: **24.06.2009**
(21) Application number: 07123592.3
(22) Date of filing: 19.12.2007
(51) Int. Cl.: H04B 1/52

(54) **A method for transmission and reception in FDD mode or in TDD mode in an antenna network, an antenna network, a base station, a mobile station and a communication network therefor**

(71) Applicant: Alcatel-Lucent Deutschland AG, 70435 Stuttgart (DE)
(72) Inventor: Fischer, Georg, 90425 Nuremberg (DE)
(74) Representative: Brose, Gerhard

(57) **Abstract**

The invention concerns a method for transmission and reception in FDD mode or in TDD mode in an antenna network comprising a tunable transmission filter (TXF) and a tunable reception filter (RXF), whereby in FDD mode, the tunable transmission filter (TXF) is tuned fix to the transmission frequency band and the tunable reception filter (RXF) is tuned fix to the reception frequency band, in TDD mode during transmission, the tunable transmission filter (TXF) is tuned to the used frequency band, and the tunable reception filter (RXF) is detuned out of the used frequency band, and in TDD mode during reception, the tunable reception filter (RXF) is tuned to the used frequency band, and the tunable transmission filter (TXF) is detuned out of the used frequency band, an antenna network, a base station, a mobile station, and a communication network therefor.

## Description

The invention relates to a method for transmission and reception in FDD mode (FDD = frequency division duplex) or in TDD mode (TDD = time division duplex) in an antenna network according to the preamble of claim 1, an antenna network according to the preamble of claim 7, a base station according to the preamble of claim 10, a mobile station according to the preamble of claim 11, and a communication network according to the preamble of claim 12.

Systems applying Software Defined Radio (SDR) gain increasingly in importance as they enable the convergence of the various existing radio protocols. An SDR system works independent of the carrier frequency of the high frequency signal of the various radio protocols. This is achieved by means of replacing functions that have been realized in hardware with functions realized in software modules on a programmable hardware platform.

Radio protocols that can be offered by such an SDR system are e.g. Worldwide Interoperability for Microwave Access (WIMAX), Third Generation Partnership Project Long Term Evolution (3GPP LTE) or Wireless Local Area Network (WLAN).

Of major importance in this context for service providers are SDR systems that allow for a migration between systems in TDD mode and systems in FDD mode, as e.g. between a so-called WIMAX TDD system and a 3GPP LTE FDD system, or between a WIMAX TDD system and a MIMAX FDD system.

According to the state of the art, an FDD base station requires a duplex filter for coupling together a transmitter and a receiver working simultaneously at different frequencies, whereas a TDD base station requires a transmitter/receiver switch and one shared filter for transmission and reception.

However, for an SDR base station offering the possibility for migration between TDD and FDD systems, it is desirable that the antenna network can be reconfigured between TDD and FDD operation.

Solutions according to the state of the art for reconfiguration of the antenna network between TDD and FDD mode require extra switches which introduce losses and by that hit the output power and sensitivity. The performance of both FDD and TDD mode would be degraded with the switches. Here, SDR technology would come at the cost of less output power and less sensitivity. Also the complexity of the antenna network would significantly rise for providing the opportunity to do reconfiguration between TDD and FDD mode. So SDR technology with such an antenna network would come at a significant cost hit.

An example for a dual mode transceiver according to the state of the art operating both in TDD and FDD by means of switches is disclosed in the US patent US 5881369.

The object of the invention is thus to propose a method for reconfiguration of an antenna network between TDD and FDD mode with reduced losses and less complexity compared to the state of the art.

This object is achieved by a method according to the teaching of claim 1, an antenna network according to the teaching of claim 7, a base station according to the teaching of claim 10, a mobile station according to the teaching of claim 11 and a communication network according to the teaching of claim 12.

The main idea of the invention is to replace the transmitter/receiver switch needed for operation in TDD mode with a double filter comprising a tunable transmission filter and a tunable reception filter. According to the invention, the transmitter/receiver switch function is implemented by fast tuning in and out the passband of the tunable transmission filter and the tunable reception filter.

For operation in FDD mode, the tunable transmission filter is tuned fix to the transmission frequency band and the tunable reception filter is tuned fix to the reception frequency band.

Further developments of the invention can be gathered from the dependent claims and the following description.

In the following the invention will be explained further making reference to the attached drawings.
Fig. 1 schematically shows an antenna network according to the state of the art that can be reconfigured between TDD and FDD mode by means of switches.
Fig. 2 schematically shows an antenna network according to the invention that can be reconfigured between TDD and FDD mode by means of a tunable double filter.

According to the solutions of the prior art, several switches are needed in order to perform reconfiguration of the antenna network between FDD and TDD mode. The switches introduce losses and by that hit output power and sensitivity.

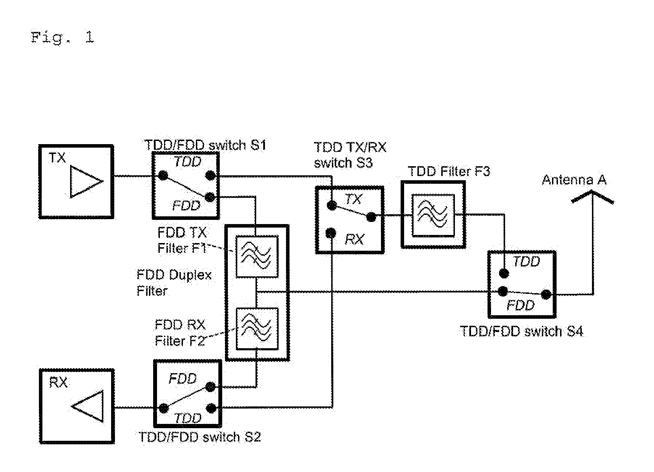

Fig. 1 shows the principle structure of such an antenna network according to the prior art.

A transmitter TX is connected to a TDD/FDD switch S1 that can be put in TDD mode or in FDD mode.

Said switch S1 in turn has connections both to a FDD transmission filter F1 of a FDD duplex filter and to a TDD transmission/reception switch S3 that can be put in transmission or reception mode.

Said TDD transmission/reception switch S3 is connected via a TDD filter F3 and a TDD/FDD switch S4 that can be put in TDD mode or in FDD mode with the antenna A.

A receiver RX is connected to a TDD/FDD switch S2 that can be put in TDD mode or in FDD mode.

Said switch S2 in turn has connections both to a FDD reception filter F2 of the FDD duplex filter and to the TDD transmission/reception switch S3.

Both the FDD transmission filter F1 and the FDD reception on filter F2 are connected to the TDD/FDD switch S4.

### Antenna network working in FDD transmission mode

Signals from the transmitter TX are sent via the switch S1, which is in FDD mode, to the input of the FDD transmission filter F1. Said FDD transmission filter F1 has a passband that is tuned to the frequency band used for transmission. Furthermore, the FDD transmission filter F1 blocks signals with frequencies in the frequency band used for reception.

From the output of the FDD transmission filter F1, the signals are sent via the TDD/FDD switch S4, which is in FDD mode, to the antenna A for transmission over the air.

As the FDD reception filter F2 blocks signals with frequencies in the frequency band used for transmission, the signals from the transmitter will not pass through the FDD reception filter F2 to the receiver RX.

### Antenna network working in FDD reception mode

Signals that are received at the antenna A are sent via the TDD/FDD switch S4, which is in FDD mode, to the input of the FDD reception filter F2. The FDD reception filter F2 has a passband that is tuned to the frequency band used for reception.

From the output of the FDD reception filter F2, the signals are sent via the TDD/FDD switch S2, which is in FDD mode, to the receiver RX.

As the FDD transmission filter F1 blocks signals with frequencies in the frequency band used for reception, the signals received at the antenna A will not pass through the FDD transmission filter F1 to the transmitter TX.

### Antenna network working in TDD transmission mode

Signals from the transmitter TX are sent via the switch S1, which is in TDD mode, and via the TDD transmission/reception switch S3, which is in transmit mode, to the TDD filter F3.

As the frequency band used for transmission and reception is the same in TDD mode, there is only one TDD filter F3 with a passband that is tuned to said frequency band.

From the TDD filter F3, the signals are sent via the TDD/FDD switch S4, which is in TDD mode, to the antenna A for transmission over the air.

### Antenna network working in TDD reception mode

Signals that are received at the antenna A are sent via the TDD/FDD switch S4, which is in TDD mode, to the TDD filter F3.

From the TDD filter F3, the signals are sent via the TDD transmission/reception switch S3, which is in receive mode, and via the switch S2, which is in TDD mode, to the receiver RX.

In the antenna network as described above, both FDD and TDD mode are degraded due to increased losses and reduced sensitivity caused by the usage of the various switches. Furthermore, the switches also lead to a high level of complexity of the antenna network.

A system with a dual mode transceiver architecture using switch arrays capable of operating in both FDD or in TDD mode is e.g. disclosed in the patent US5881369.

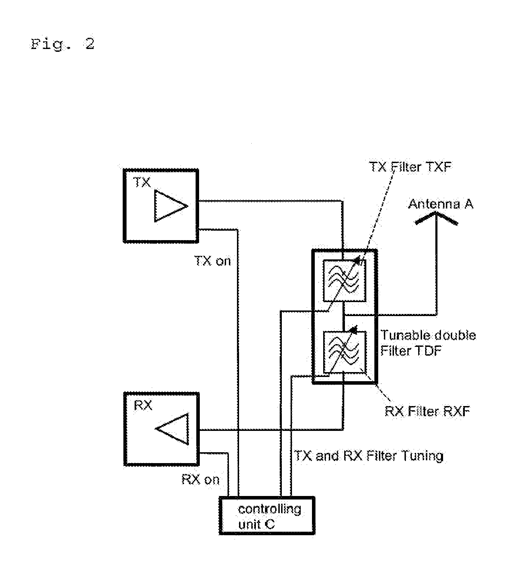

Fig. 2 shows the principle structure of an antenna network according to the invention.

A transmitter TX is connected to a controlling unit C and to a tunable transmission filter TXF of a tunable double filter TDF.

Said tunable transmission filter TXF is connected to the controlling unit C.

A receiver RX is connected to the controlling unit C and to a tunable reception filter RXF of the tunable double filter TDF.

Said tunable reception filter RXF is connected to the controlling unit C.

Both the tunable transmission filter TXF and the tunable reception filter RXF are connected to an antenna A.

### Antenna network according to the invention working in FDD transmission mode

In order to turn on the transmission mode, the controlling unit C sends a signal to the transmitter TX indicating the start of the transmission mode.

Furthermore, the controlling unit C sends a signal to the tunable transmission filter TXF in order to tune the passband of the tunable transmission filter TXF to the frequency band that is used for transmission and that depends on the used radio protocol. During the time that the antenna network is working in FDD mode, the tunable transmission filter TXF is not retuned, and its passband stays fix.

Signals from the transmitter TX are sent to the input of the tunable transmission filter TXF. As already stated above, said tunable transmission filter TXF has a passband that is tuned to the frequency band used for transmission. Furthermore, the tunable transmission filter TXF blocks signals with frequencies in the frequency band used for reception.

From the output of the tunable transmission filter TXF, the signals are sent to the antenna A for transmission over the air.

### Antenna network according to the invention working in FDD reception mode

In order to turn on the reception mode, the controlling unit C sends a signal to the receiver RX indicating the start of the reception mode.

Furthermore, the controlling unit C sends a signal to the tunable reception filter RXF in order to tune the passband of the tunable reception filter RXF to the frequency band that is used for reception and that depends on the used radio protocol. During the time that the antenna network is working in FDD mode, the tunable reception filter RXF is not retuned, and its passband stays fix.

Signals that are received at the antenna A are sent to the input of the tunable reception filter RXF. As already stated above, said tunable reception filter RXF has a passband that is tuned to the frequency band used for reception. Furthermore, the tunable reception filter RXF blocks signals with frequencies in the frequency band used for transmission.

From the output of the tunable reception filter RXF, the signals are sent to the receiver RX.

### Antenna network according to the invention working in TDD transmission mode

In order to turn on the transmission mode, the controlling unit C sends a signal to the transmitter TX indicating the start of the transmission mode.

Furthermore, the controlling unit C sends a signal to the tunable transmission filter TXF in order to tune the passband of the tunable transmission filter TXF to the frequency band that is used for transmission and reception and that depends on the used radio protocol. As the frequency band used for transmission and reception is the same in TDD mode, the tunable reception filter RXF is detuned out of the used frequency band during transmission, preferably with a large frequency offset, in order to minimize the signal power that passes through the tunable reception filter RXF, as this would imply loss of transmission power and potentially could overdrive and thus destroy the receiver RX.

Signals from the transmitter TX are sent to the input of the tunable transmission filter TXF. As already stated above, said tunable transmission filter TXF has a passband that is tuned to the used frequency band. Furthermore, the tunable reception filter RXF blocks signals with frequencies in the used frequency band.

From the output of the tunable transmission filter TXF, the signals are sent to the antenna A for transmission over the air.

### Antenna network according to the invention working in TDD reception mode

In order to turn on the reception mode, the controlling unit C sends a signal to the receiver RX indicating the start of the reception mode.

Furthermore, the controlling unit C sends a signal to the tunable reception filter RXF in order to tune the passband of the tunable reception filter RXF to the frequency band that is used for transmission and reception and that depends on the used radio protocol. As the frequency band used for transmission and reception is the same in TDD mode, the tunable transmission filter TXF is detuned out of the used frequency band during reception, preferably with a large frequency offset, in order to minimize the signal power of signals that pass through the tunable transmission filter TXF to the transmitter TX, as all power received by the antenna A should go into the receiver RX in order to ensure highest sensitivity.

Signals that are received at the antenna A are sent to the input of the tunable reception filter RXF. As already stated above, said tunable reception filter RXF has a passband that is tuned to the used frequency band. Furthermore, the tunable transmission filter TXF blocks signals with frequencies in the used frequency band.

From the output of the tunable reception filter RXF, the signals are sent to the receiver RX.

During the time that the antenna network is working in TDD mode, both the tunable transmission filter TXF and the tunable reception filter RXF must be fast retuned when the antenna network is switched from transmission to reception or vice versa in order to change the passband quickly.

In an embodiment of the invention, the tunable transmission filter TXF or the tunable reception filter RXF comprises tunable so-called L-C filters, which are based on a network of at least one inductor and at least one variable capacitance, which is called varactor.

In another embodiment of the invention, the tunable transmission filter TXF or the tunable reception filter RXF comprises so-called metamaterial structures, which are artificial structures or circuits that can be designed to exhibit specific electromagnetic properties not commonly found in nature.

Variable capacitances that are preferably comprised in the tunable transmission filter TXF or in the tunable reception filter RXF are so-called varactors made e.g. out of varicap diodes, Barium Strontium Titanate, Micro Electro Mechanical Systems (MEMS) or piezo-actuated varactors.

In another embodiment of the invention, the tunable transmission filter TXF or the tunable reception filter RXF comprises variable inductances called variometers preferably in combination with varactors.

The necessary tuning speed of the variable capacitance depends on the allowed transition time for switching between transmission and reception of the target TDD standard. It a WIMAX system, the pause between transmit and receive is around 4 to 87 us depending on how the air interface is configured.

Such an antenna network according to the invention can be comprised in a base station or in a mobile station that is part of a communication network.

In conclusion, the application of the invention avoids losses that are related to the usage of switches. This ensures that the SDR characteristic of reconfigurability between TDD and FDD mode does not go along with degraded sensitivity and less output power. The complexity of the antenna network according to the invention is significantly lower compared to antenna networks according to the state of the art, as at least the number of subunits in the RF paths is massively reduced. Furthermore, tunable filter technology may anyhow be in place if the SDR base station has to provide frequency agility.

## Claims

1. A **method** for transmission and reception in FDD mode or in TDD mode in an antenna network comprising a tunable transmission filter (TXF) and a tunable reception filter (RXF) **characterized in, that**
• in FDD mode, the tunable transmission filter (TXF) is tuned fix to the transmission frequency band and the tunable reception filter (RXF) is tuned fix to the reception frequency band using a controlling unit (C),
• in TDD mode during transmission, the tunable transmission filter (TXF) is tuned to the used frequency band, and the tunable reception filter (RXF) is detuned out of the used frequency band using the controlling unit (C),
• and in TDD mode during reception, the tunable reception filter (RXF) is tuned to the used frequency band, and the tunable transmission filter (TXF) is detuned out of the used frequency band using the controlling unit (C).

2. A method according to claim 1, **characterized in, that** said tunable transmission filter (TXF) and tunable reception filter (RXF) are tunable L-C filters or comprise tunable metamaterial structures.

3. A method according to claim 1, **characterized in, that** said antenna network is reconfigured between FDD and TDD mode for software defined radio application.

4. A method according to claim 3, **characterized in, that** the antenna network is reconfigured between TDD mode and TDD mode within one communication standard, or between TDD mode of a first communication standard and FDD mode of a second communication standard.

5. A method according to claim 4, **characterized in, that** the antenna network is reconfigured between TDD mode of a WIMAX communication system and FDD mode of a 3GPP LTE communication system.

6. A method according to claim 3, **characterized in, that** the controlling unit (C) automatically initiates a reconfiguration between FDD mode and TDD mode on reception of a trigger signal,

7. An antenna network comprising a tunable transmission filter (TXF) and a tunable reception filter (RXF) for transmission and reception in FDD mode or in TDD mode, **characterized in, that**
• said antenna network comprises a controlling unit (C) for tuning said tunable transmission filter (TXF) and said tunable reception filter (RXF),
• and said tunable transmission filter (TXF) is used for transmission in FDD mode and in TDD mode, and said tunable reception filter (RXF) is used for reception in FDD mode and in TDD mode.

8. An antenna network according to claim. 7, **characterized in, that** the tunable transmission filter (TXF) or the tunable reception filter (RXF) comprises at least one varactor.

9. An antenna network according to claim 8, **characterized in, that** said at least one varactor is a piezo-actuated varactor.

10. A base station comprising at least one antenna network comprising a tunable transmission filter (TXF) and a tunable reception filter (RXF) for transmission and reception in FDD mode or in TDD mode, **characterized in, that**
• said antenna network comprises a controlling unit (C) for tuning said tunable transmission filter (TXF) and said tunable reception filter (RXF),
• and said tunable transmission filter (TXF) is used for transmission in FDD mode and in TDD mode, and said tunable reception filter (RXF) is used for reception in FDD mode and in TDD mode.

11. A mobile station comprising at least one antenna network comprising a tunable transmission filter (TXF) and a tunable reception filter (RXF) for transmission and reception in FDD mode or in TDD mode, **characterized in, that**
• said antenna network comprises a controlling unit (C) for tuning said tunable transmission filter (TXF) and said tunable reception filter (RXF),
• and said tunable transmission filter (TXF) is used for transmission in FDD mode and in TDD mode, and said tunable reception filter (RXF) is used for reception in FDD mode and in TDD mode.

12. A communication network comprising at least one base station or one mobile station that comprises at least one antenna network comprising a tunable transmission filter (TXF) and a tunable reception filter (RXF) for transmission and reception in FDD mode or in TDD mode, **characterized in, that**
• said antenna network comprises a controlling unit (C) for tuning said tunable transmission filter (TXF) and said tunable reception filter (RXF),
• and said tunable transmission filter (TXF) is used for transmission in FDD mode and in TDD mode, and said tunable reception filter (RXF) is used for reception in TDD mode and in TDD mode.
